# EUROPEAN PATENT APPLICATION

(11) **EP 1 415 958 A1**
(43) Date of publication of application: **06.05.2004**
(21) Application number: 02745904.9
(22) Date of filing: 10.07.2002
(51) Int. Cl.: C03B 11/08, G02B 3/00

(54) **MOLD, PLATE, SUCTION JIG, MOLDING METAL MOLD, DISASSEMBLING/ASSEMBLING APPARATUS, AND DISASSEMBLING/ASSEMBLING METHOD**

(30) Priority: 11.07.2001 JP 2001210433
(71) Applicant: MATSUSHITA ELECTRIC INDUSTRIAL CO., LTD., Kadoma-shi, Osaka 571-8501 (JP)
(72) Inventor: NAKAMURA, Syoji, Hirakata-shi, Osaka 573-0073 (JP); MURATA, Jun, Yao-shi, Osaka 581-0036 (JP); SHIMIZU, Yoshiyuki, Hirakata-shi, Osaka 573-0071 (JP); MORIGUCHI, Seiji, Osaka-shi, Osaka 537-0012 (JP); SUNOHARA, Masaaki, Nishinomiya-shi, Hyogo 662-0835 (JP)
(74) Representative: Grünecker, Kinkeldey, Stockmair & Schwanhäusser Anwaltssozietät
(86) International application number: PCT/JP2002/006989
(87) International publication number: WO 2003/010099

(57) **Abstract**

When a molded lens is taken out from a molding die, it may be broken or damaged. Consequently, the lens may be markedly ineffectively produced. The present invention provides a molding die comprising an upper die for lens molding 21, a lower die for lens molding 24, a support die 27, and a mold 29. At least either the upper die 21 or lower die 24 has no flange. The support die 27 is provided below the die having no flanges. One or more through-holes 28 are formed in the support die 27 so that lifting pins can be inserted through the respective through holes. The upper and lower dies 21 and 24 can be slid relative to the mold 29.

## Description

### Technical Field

The present invention relates to a die used to mold a lens used for optical equipment, a plate used for sputtering in order to apply a release film to the die, a sucking jig that sucks a pressed lens, a molding die used to mold a lens, and a disassembly and assembly apparatus and method used to press a lens.

### Background Art

Figures 10(a), 10(b), 10(c), and 10(d) are sectional views of illustrating essential parts of a molding die for optical elements and a manufacturingmethod of optical elements both proposed previously by the inventor relating to the application. That is, Figures 10(a), 10(b), 10(c), and 10(d) show a molding die used to form a glass lens using a precision glass molding method as well as a manufacturing method of optical elements.

Figure 10(a) shows a configuration of a molding block 88. In Figure 10(a), a flange portion 85 is formed integrally with an upper die 82 having an optically functioning surface 81 formed at the bottom and with a lower die 84 having another optically functioning surface 83 formed at the top. A molding die is composed of the upper die 82, the lower die 84, and a mold 86 through which the upper and lower dies 82 and 84 are slidably guided. A molding material 87 is placed in an internal part composed of the upper and lower dies 82 and 84 and the mold 86 to constitute a molding block 88.

Figure 10(b) shows that the moldingblock 88 is heated and pressed so as to be deformed. In Figure 10(b), the whole molding block 88 is heated using an upper and lower heating plates 91 and 92. Once the molding material is softened, it is pressed and deformed by an applied pressure P via the upper heating plate 91. Thus, the optically functioning surfaces 81 and 83 are precisely transferred to the molding material 87 to form a lens 89 that is an optical element.

Figure 10(c) shows that the whole molding block 88 is cooled. In Figure 10(c), the whole molding block 88 is cooled and then the upper mold 82 is taken out of the mold 86. Furthermore, a sucking jig or the like is used to take the molded lens 89 out of the mold 86 to manufacture an optical element.

However productively and precisely a lens as an optical element can be formed, the productivity may be markedly degraded if the lens is inclined within the mold 86 as shown in Figure 10(c) and cannot be taken out. The tendency of the lens to remain in the mold is more significant as the thickness of a round edge portion 90 of the lens 89 increases. The reason will be described with reference to Figure 10(d). Figure 10(d) shows a state after molding. The conditions under which the lens can be taken out of the mold include the property with which the lens is released from the mold or adheres to the mold, as well as the coefficient of thermal expansion of the molding material larger than that of the molding die. Accordingly, the molded lens shrinks more markedly than the molding die.

For example, if the lens 89 is shaped like meniscus, a surface of the lens which contacts with the optically functioning surface 81 of the upper die is formed to have a larger radius of curvature than the optically functioning surface. Further, a surface of the lens which contacts with the lower die is formed to have a larger radius of curvature than the optically functioning surface 83. Accordingly, the bottom lens surface contacts unstably with the optically functioning surface of the molding die because of a point contact occurring only at a point P1. On the other hand, the top lens surface contacts stably with the optically functionally surface at points P2 and P3. When the upper die is taken out of the mold as shown in Figure 10(c), the lens may be slightly sucked upward by vacuum adhesion. Subsequently, when the vacuum is cleared to drop the lens, the lens may be inclined in the mold. With the lens inclined, if the sucking jig contacts inappropriately with the lens, the lens may further cut into the mold. Consequently, the lens is markedly ineffectively produced: the lens may be broken or damaged.

A solution for the above problem is disclosed as an optical element releasing method in Japanese Patent Laid-Open No. 2-184532.

However, factors determining the adhesion between a molding die and a lens may include a difference in the coefficient of thermal expansion between a molding material and a diematerial, the wettability of the molding material to the surface of the molding die, and the size and shape of the lens. These factors cannot be easily satisfied. The above publication also describes a method of releasing the molded lens by pinching sides of the molded lens and separating the relative positions of the lens and mold from each other in a vertical direction. However, a very strong force is required depending on the size of the lens. If thepurpose is to clear an adhering state, it may be effective to oscillate the lens slightly. However, this may disadvantageously damage the surface of the die.

Specifically, when the molded lens is taken out of the molding die, the lens may be broken or damaged. Thus, disadvantageously, the lens is ineffectively produced.

Further, the upper and lower dies 82 and 84, used in the description of Figures 10(a) to 10(d), are each formed of the optically functioning surfaces 81 or 83, respectively, at one end surface of a cylinder-shape and the flange portion 85 at the other end surface of the cylinder-shape. The flange portion 85 is effectively utilized as a holdingportionwhile the die is being wrought or when a release film is formed on the optically functioning surface.

However, five surfaces must be precisely wrought, i.e. the outer diameter surface, the opposite surfaces and outer diameter of the flange portion, and the optically functioning surface. This increases working time and costs, thus hindering the provision of more inexpensive lenses. Further, in order to improve the productivity associated with lens molding by simultaneously molding lenses using molding dies with a large number of surfaces to be wrought, molding dies are required in which in particular the optically functioning surface has a submicron precision and in which the distances from the optically functioning surfaces to the corresponding surfaces of the respective flange portions 85 must be controlled with a precision of the order of microns. This makes working costs significantly expensive.

That is, disadvantageously, it is difficult to make the flange portions precisely and these portions require very high working costs.

Further, when a release film is formedon the optically functioning surface to allow this surface to be released from glass, the outer diameter dimension of the flange portion 85 determines the number of dies introduced into a sputter apparatus per batch. That is, since the flange portion 85 has a large area, it is impossible to introduce a large number of dies into the sputter apparatus per batch. Consequently, the productivity associated with film formation is degraded to increase costs sharply.

That is, disadvantageously, when a release film is formed on the optically functioning surface to allow this surface to be released from glass, the presence of the flange portion prevents a large number of dies from being introduced into the sputter apparatus per batch. Consequently, the productivity is degraded to increase costs.

### Disclosure of the Invention

In view of the above problems, it is an object of the present invention to provide a sucking jig, a molding die, and a disassembly and assembly apparatus and method all of which serve to improve the productivity associated with the extraction of a manufactured lens from the molding die.

In view of the above problems, it is another object of the present invention to provide a die and a plate which reduce working costs.

In view of the above problems , it is yet another obj ect of the present invention to provide a die and a plate which improve the productivity associated with the formation of a release film by sputtering, thus reducing costs.

To solve the above-described problems, a first invention of the present invention is an upper die or lower die for lens molding wherein a groove is formed in its side.

A second invention of the present invention is the die according to the first invention of the present invention, wherein the die is a cylinder having said groove formed on its circumference.

A third invention of the present invention is a plate comprising a plurality of holes in which the groove in the die according to the first or the second invention of the present invention is caught and held,
wherein said die is held when said die is sputtered.

A fourth invention of the present invention is a suction jig which enters the die and does not abut against a center of a target lens surface but abut against a periphery of said lens surface.

A fifth invention of the present invention is the suction jig according to the fourth invention of the present invention, having a radius of curvature which is larger than that of the cooled target lens surface or being a flat plate when said target lens surface is concave.

A sixth invention of the present invention is the suction jig according to the fourth invention of the present invention, having a radius of curvature which is smaller than that of the cooled target lens surface when said target lens surface is convex.

A seventh invention of the present invention is a molding die comprising:
an upper die for lens molding;
a lower die for lens molding;
a support die; and
a mold,
wherein at least either said upper or lower dies has no flange,
said support die is provided below the die having no flange,
one or more through-holes are formed in the support die so that lifting pins can be inserted through the respective through holes, and
said upper and lower dies can be slid relative to said mold.

An eighth invention of the present invention is the molding die according to the seventh invention of the present invention, wherein:
said mold is a member in which a plurality of upper and lower die insertion holes,
said upper die and lower die are slidably housed in each of the holes,
a positioning concave or convex portion is formed in said mold,
a convex or concave portion is formed which corresponds to said positioning concave or convex portion, and
a plurality of said through-holes are formed in said support die at positions corresponding to positions of said upper and lower die insertion holes.

A ninth invention of the present invention is a disassembly and assembly apparatus comprising:
a base on which the molding die according to the seventh invention of the present invention, having a pressed lens, is placed;
a pushing-up pin;
a sucking jig; and
moving means of moving said sucking jig,
wherein at least an operation is performed which comprises using said push-up pin to lift said upper and lower dies and said lens up to a position where said lens is exposed from said mold,
subsequently, at least an operation is performed which comprises using said sucking jig to suck one of the dies and using said moving means to separate the die from said lens, and
said lens is taken out.

A tenth invention of the present invention is the disassembly and assembly apparatus according to the ninth invention of the present invention, wherein when said pushing-up pin is used to push up the upper and lower dies and the lens, the pushing-up operation of said pushing-up pin is synchronized to the moving operation of said sucking jig.

An eleventh invention of the present invention is a disassembly and assembly method using a disassembly and assembly apparatus comprising a base on which the molding die according to the seventh invention of the present invention, having a pressed lens, is placed, a pushing-up pin, a sucking jig, and moving means of moving said sucking jig, said method further comprising:
performing at least a step of using said pushing-up pin to lift said upper and lower dies and said lens up to a position where said lens is exposed from said mold,
subsequently, performing at least a step of using said sucking jig to suck one of the dies and using said moving means to separate the die from said lens, and
taking out said lens.

The present invention may have the following solutions:

A first aspect of the invention provides means of productively removing an optical element molded using an optical element molding die composed of an upper and lower dies and a mold. This means comprises an outer diameter that precisely fits the mold, a suction port which is formed in one end surface extending perpendicularly to the outer diameter and which is connected to a suction apparatus, and a sucking surface which is formed on the other end surface with which the suctionport is in communication. The shape of the sucking surface approximates to the shape of an optical surface of the molded optical element.

Further, according to a second aspect of the invention, a concave optical surface of the molded optical element as the sucking surface has a smaller radius of curvature than said optical surface, while a convex optical surface of the molded optical element as the sucking surface has a larger radius of curvature.

Furthermore, as means of reducing the costs of an optical element molding die and productively manufacturing an optical element, a third aspect of the invention provides an optical element molding die comprising a support die including a through-hole in its center, a mold that fits the support die, and an upper and lower dies which are slidably guided through the mold and each of which includes an optically functioning surface. According to this aspect, it is possible to reduce the working costs of the upper and lower dies and to take out the optical element productively by utilizing the through-hole in the support die.

Moreover, according to a fourth aspect of the invention, the upper and lower dies are each simply cylindrical and each comprise a groove portion in its outer peripheral portion which is used to form a release film on the optically functioning surface, the release film serving to prevent oxidation. This improves the productivity associated with film formation to reduce the costs of the mold.

Further, a fifth aspect of the invention provides a film forming jig for sputtering or the like composed of a groove portion in which a plurality of upper and lower dies can be accommodated using a part of an outer periphery of a disc of a predetermined thickness or a center of the disc, so that the groove potion can engage with the groove portions formed in the upper and lower dies to hold the upper and lower dies. This serves to reduce the costs of the mold.

Furthermore, a sixth aspect of the invention provides a die disassembly and assembly apparatus of taking out an optical element molded by the optical element molding die, the apparatus comprising an upper die sucking member connected to an elevating and lowering cylinder and shaft-guided via a slide bearing, a pin member that passes through the through-hole formed in a center of the support die so as to ej ect the upper and lower dies, and a sucking member used to take out the optical element and introduce a molding material. This improves the productivity associated with removal of the optical element.

Moreover, a seventh aspect of the invention provides an optical element molding die serving to reduce the costs of the optical element and comprising a plurality of upper and lower dies each including an optically functioning surface, a cylindrical mold through which the upper and lower dies are slidably guided and which includes a plurality of first through-holes spaced at equal intervals on arbitrary pitch circle diameters and constituting cavities, and a support die including second through-holes each having a smaller diameter than the first through-hole and spaced at equal intervals on the same pitch circle diameters as the support die being loosely pressed into the mold so that a central axis of each first through-hole coincides with a central axis of the corresponding second through-hole.

Further, an eighth aspect of the invention provides a manufacturing method of an optical element molding die comprising a step of slitting an outer periphery of a cylinder at a predetermined pitch to form groove portions, a step of grinding the outer periphery of the cylinder, a cutting step of cutting the cylinder into pieces using the same pitch as the predetermined one so as to leave the groove portions, a step of forming an optically functioning surface on one end surface of each piece of the cylinders, the end surface extending perpendicularly to the outer periphery, a step of grinding the other end surface of each piece with reference to the optically functioning surface, and a step of carrying out sputtering to forma release film on the optically functioning surface of each piece.

Furthermore, a ninth aspect of the invention comprise a manufacturing method of optical elements which allows optical elements to be more effectively produced, the method comprising a step of forming a molding block by introducing a plurality of molding materials into respective cavities each composed of a plurality of upper and lower dies each including an optically functioning surface, a support die which supports the upper and lower dies and which includes a plurality of through-holes through which pins can be passed in order to eject the plurality of upper and lower dies, and first through-holes through which the upper and lower dies are slidably guided, a heating step of heating the whole molding block to soften each of the molding materials, a heating and pressing step of pressing and deforming the softened molding material to transfer the optically functioning surface to the molding material, a cooling step of cooling the whole molding block, a step of disassembling the molding die to take out a plurality of optical elements, and a step of introducing a plurality of molding materials into the molding die and assembling a mold.

### Brief Description of the Drawings

Figure 1(a) is a sectional view of essential parts of an optical element sucking apparatus according to a first embodiment of the present invention;
Figure 1(b) is a sectional view of the essential parts of the optical element sucking apparatus according to the first embodiment of the present invention;
Figure 1(c) is a sectional view of the essential parts of the optical element sucking apparatus according to the first embodiment of the present invention;
Figure 2(a) is a sectional view of essential parts of an optical element molding die according to a second embodiment of the present invention;
Figure 2(b) is a sectional view of essential parts of the optical element molding die according to the second embodiment of the present invention;
Figure 3(a) is a perspective view of a sputtering film forming jig obtained according to a third embodiment of the present invention;
Figure 3(b) is a perspective view of the sputtering film forming jig obtained according to the third embodiment of the present invention;
Figure 3(c) is a perspective view of the sputtering film forming jig obtained according to the third embodiment of the present invention;
Figure 4(a) is a sectional view illustrating essential parts of a disassembly and assembly apparatus for an optical element molding die according to a fourth embodiment of the present invention;
Figure 4(b) is a sectional view illustrating the essential parts of the disassembly and assembly apparatus for the optical element molding die according to the fourth embodiment of the present invention;
Figure 4(c) is a sectional view illustrating the essential parts of the disassembly and assembly apparatus for the optical element molding die according to the fourth embodiment of the present invention;
Figure 5(d) is a sectional view illustrating the essential parts of the disassembly and assembly apparatus for the optical element molding die according to the fourth embodiment of the present invention;
Figure 5(e) is a sectional view illustrating the essential parts of the disassembly and assembly apparatus for the optical element molding die according to the fourth embodiment of the present invention;
Figure 5(f) is a sectional view illustrating the essential parts of the disassembly and assembly apparatus for the optical element molding die according to the fourth embodiment of the present invention;
Figure 6(a) is a perspective view illustrating an optical element molding die according to a fifth embodiment of the present invention;
Figure 6(b) is a perspective view illustrating the optical element molding die according to the fifth embodiment of the present invention;
Figure 6(c) is a perspective view illustrating the optical element molding die according to the fifth embodiment of the present invention;
Figure 7(a) is a perspective view illustrating a working method of an optical element molding die according to the sixth embodiment of the present invention;
Figure 7(b) is a perspective view illustrating the working method of the optical element molding die according to the sixth embodiment of the present invention;
Figure 7(c) is a perspective view illustrating the working method of the optical element molding die according to the sixth embodiment of the present invention;
Figure 7(d) is a perspective view illustrating the working method of the optical element molding die according to the sixth embodiment of the present invention;
Figure 7(e) is a perspective view illustrating the working method of the optical element molding die according to the sixth embodiment of the present invention;
Figure 8(a) is a sectional view illustrating essential parts of a method of manufacturing an optical element using the optical element molding die according to the fifth and sixth embodiments of the present invention;
Figure 8(b) is a sectional view illustrating the essential parts of the method of manufacturing an optical element using the optical element molding die according to the fifth and sixth embodiments of the present invention;
Figure 8(c) is a sectional view illustrating the essential parts of the method of manufacturing an optical element using the optical element molding die according to the fifth and sixth embodiments of the present invention;
Figure 8(d) is a sectional view illustrating the essential parts of the method of manufacturing an optical element using the optical element molding die according to the fifth and sixth embodiments of the present invention;
Figure 9(e) is a sectional view illustrating the essential parts of the method of manufacturing an optical element using the optical element molding die according to the fifth and sixth embodiments of the present invention;
Figure 9(f) is a sectional view illustrating the essential parts of the method of manufacturing an optical element using the optical element molding die according to the fifth and sixth embodiments of the present invention;
Figure 9(g) is a sectional view illustrating the essential parts of the method of manufacturing an optical element using the optical element molding die according to the fifth and sixth embodiments of the present invention;
Figure 9(h) is a sectional view illustrating the essential parts of the method of manufacturing an optical element using the optical element molding die according to the fifth and sixth embodiments of the present invention;
Figure 10(a) is a sectional view illustrating essential parts of a molding die for optical elements and a manufacturing method of optical elements both proposed previously by the inventor relating to the application;
Figure 10(b) is a sectional view illustrating the essential parts of the molding die for optical elements and the manufacturing method of optical elements both proposed previously by the inventor relating to the application;
Figure 10(c) is a sectional view illustrating the essential parts of the molding die for optical elements and a manufacturing method of optical elements both proposed previously by the inventor relating to the application; and
Figure 10(d) is a sectional view illustrating the essential parts of the molding die for optical elements and the manufacturing method of optical elements both proposed previously by the inventor relating to the application.

### (Description of Symbols)

11 Suction jig
21 Upper die
22, 25 Optically functioning surfaces
23, 26 Slit groove
24 Lower die
27 Support die
28 Through-hole
29, 104 Molds
31, 101 Molding blocks
32 Upper heating plate
33 Lower heating plate
30 Molding material
34 Optical element
35 Film forming jig
36 Notched portion
41 Mold disassembly and assembly apparatus
68 Work rotating shaft
69 Grindstone rotating shaft
73 Grinding stone
110 Heater
111 Lens
112 Die sucking jig
115 Lens sucking jig

### Best Mode for Carrying Out the Invention

Embodiments of the present invention will be described below with reference to the drawings.

### (Embodiment 1)

First, Embodiment 1 will be described.

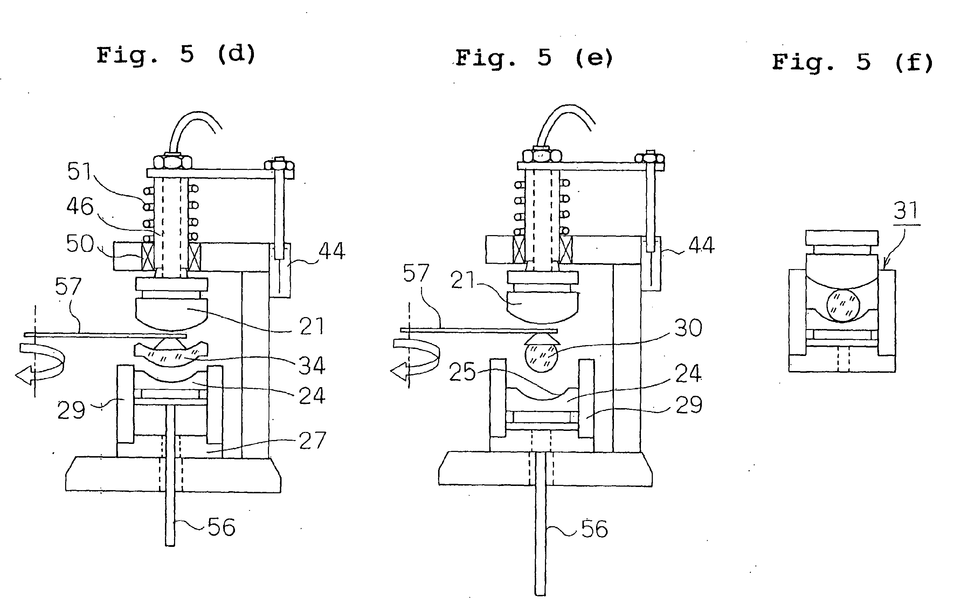

With reference to Figures 1(a), 1(b), and 1(c), description will be given of an optical element sucking jig according to Embodiment 1 of the present invention.

In Figure 1(c), as described in the Background Art section, when an upper die 82 is pulled out of a mold 86, a lens 89 is instantaneously lifted upward owing to the adhesion of the lens 89 to the upper die 82. Then, the adhesion is eliminated to drop the lend 89 inside the mold 89. A round edge 90 of the lens 89 cuts into the internal part of the mold 86 to incline and set the lens 89. Figure 1(a) shows a sucking jig according to the present embodiment. The outer diameter of the sucking jig 11 is precise enough to fit into the mold 86.

That is, the outer diameter of the sucking jig 11 is equal to the outer diameter of the upper die 82 described previously. A spherical sucking surface 12 is formed on one end surface of the sucking jig 11 which extends perpendicularly to the outer diameter. A pipe 14 is clamped to the other end surface using a screw 15 and is coupled to a suction apparatus (for example, a baby pump or a convum: not shown). The sucking surface 12 and the pipe 14 are in communication with each other via a through-hole 13.

In order to change the state in Figure 1(c) to the state in Figure 1(a), the sucking jig 11 is softly pressed downwardto bring its P2 side (see Figure 8(d)) into contact with the lens 89 to correct the position of the lens 89. The shape of the sucking surface 12 has a smaller radius of curvature than the concave shape of the lens 89. Accordingly, after having its position corrected, the lens 89 comes into uniform contact with the sucking surface 89 for suction as shown at P2 and P3 in the figure (see Figure 8(d)). Subsequently, the sucking jig 11 is pulled out to allow the lens 89 to be easily taken out of the mold.

Figure 1(b) shows that the molding block, in which a molding operation has been completed, is reversed and that the lower die 84 is pulled out, with a sucking jig 16 subsequently inserted into the mold. When the lower die 84 is pulled out, the lens 89 is hardly lifted because it is not adhering to the mold. It has been confirmed that if the sucked lens surface is convex, a stable sucking operation canbe accomplished with a suction rate of nearly 100% by increasing the radius of curvature of the sucking surface 17.

In the sucking jigs 11 and 16 according to the present embodiment, the outer diameter precisely fits into the mold and the sucking surface is spherical. Further, the shapes of the lens and sucking surface are configured to have radii of curvature such that they are in surface contact with each other.

Specifically, the sucking jigs according to the present embodiment can enter the mold and has an abutting surface which has a larger or smaller radius of curvature than the corresponding surface of the cooled lens. That is, the abutting surface has a larger radius of curvature than the corresponding surface of the cooled lens if this surface is concave. On the other hand, the abutting surface has a smaller radius of curvature than the corresponding surface of the cooled lens if this surface is convex.

Thus, according to the present embodiment, when the molded lens is taken out of the molding die, the lens is not broken or damaged. Therefore, lenses can be more effectively produced.

### (Embodiment 2)

Now, Embodiment 2 will be described.

Figures 2(a) and 2(b) are sectional views illustrating essential parts of an optical element molding die according to Embodiment 2 of the present invention. This optical element molding die is adapted to allow an optical element to be more reliably taken out of the mold, the optical element being obtained by heating and softening the molding material in the same way as conventional example and then pressing and deforming the softened molding material. The optical element molding die is also adapted to achieve a reduction in die costs required to manufacture an optical element more inexpensively.

In Figure 2(a), a cylindrical upper die 21 that fits into a mold 29 has an optically functioning surface 22 formed on one end of it and a slit groove 23 formed in the outer diameter of the cylinder. The slit groove is used to vent gas from the interior of a cavity at the time of the formation of an optical element as well as to achieve another purpose described later.
Specifically, a very small D cut surface (not shown) is formed around the outer periphery of the upper die 21 all over the area of the die in the axial direction of the die. Thus, the inner wall surface of the mold 29 is in communication with the gap between the inner wall surface and the D cut surface and with the slit groove 23 to vent gas from the interior of the cavity. Accordingly, the mold 29 need not be wrought so as to vent gas from the interior of the cavity. An optically functioning surface 25 and a slit groove 26 are also formed in the lower die 24. A support die 27 is arranged below the lower die 24 so as to be fitted into the mold 29 and is formed with a through-hole 28 in its center. An internal part composed of the upper and lower dies and a mold contains a molding material 30 to constitute a molding block 31.

First, a conventional upper and lower dies each have a flange portion on one end surface of it. They thus require a large number of wrought surfaces, i.e. the outer diameter surface and planar part of the flange portion, a sliding surface fitted over the inner surface of the mold, and the optically functioning surface. The flange portion is effectively used as a holding position during working or secondary working for the optically functioning surface (for example, the formation of a release film using a sputter). However, since the flange portion has a large number of surfaces to be wrought, it is very difficult to work this portion. Further, the resulting die is expensive.

In contrast, the upper and lower dies according to the present embodiment requires the working of only their outer diameter surfaces sliding th rough the mold, the optically functioning surface, the plane opposite to the optically functioning surface, and the slit grooves, which may be relatively less precisely wrought. That is, the upper and lower dies according to the present embodiment are wrought on the basis of axes.

Specifically, when the flange portions are removed from the conventional upper and lower dies, an object of the present invention can be achieved by allowing the optical element to be more reliably taken out. This also reduces material and working costs. The support die 27 not only prevents the upper and lower dies from slipping out of the mold but also produces another effect described later in detail for a die disassembly and assembly apparatus.

Figure 2(b) is a sectional view showing essential parts of a method of manufacturing an optical element by heating, for pressing and deforming molding material in the molding block 31, described previously. This figure shows that the molding material is being deformed. An upper and lower heating plates 32 and 33 are used to heat the whole molding block 31 to soften the molding material 34. Then, pressure is exerted via the upper heating plate 32 to deform molding materials and transfer the optically functioning surface to the molding material More specifically, the upper and lower dies, the mold, and the support die are composed of a metal member mainly consisting of tungsten carbide (WC). In particular, a sputtering method is used to form a platinum alloy film on each of the optically functioning surfaces 22 and 25 in order to allow these surfaces to be easily released from the molding material.

The molding material 30 was obtained by shaping borosilicate barium glass (flexure point: 549°C, glass transition point: 501°C, specific gravity: 3.09) into a sphere. For molding, the upper and lower heating plates 32 and 33 were used to heat thermally efficiently the molding block 31 from above and below to 600°C. Then, a pressure P of 800 N was exerted to deform the molding materials. Subsequently, the heating plates were powered off, and the pressurization was continued until the temperature reached 500°C. Then, the pressurization was cleared and the whole molding block 31 was cooled down to the room temperature to obtain an optical element 34. After sufficiently cooling the molding block, a pin was manually inserted through the through-hole 28, formed in the support die 27, to take out the optical element by lifting up the lower die 24, the upper die 21, and the optical element 34 above the mold 29.

This operation was performed 200 times and it was confirmed that the optical element could be taken out of the mold in all the cases. It is assumed that the optical element was able to be appropriately taken out because through-hole 28, formed in the support die 27, allowed the pin to be used for ejection and that the weight of the upper die, which was in surface contact with the concave surface (upper surface) of the optical element, acted on this concave surface to keep balance with the central point of the convex surface (lower surface). The molding operation was performed in an inert gas to prevent the oxidation of the mold.

The flange portion according to the present embodiment is an example of a flange according to the present invention. The slit groove 23 according to the present embodiment is an example of a groove according to the present invention.

### (Embodiment 3)

Now, Embodiment 3 will be described.

Figures 3(a), 3(b), and 3(c) show a film forming jig for sputtering which is used to form a release film on an optically functioning surface of a molding die having this surface on an end surface of a cylinder. Figure 3(a) shows the lower die (shown in Figure 2(a)) 24, having the optically functioning surface 25, formed on one end surface of the cylinder, and the slit groove 26, formed in the outer diameter surface of the cylinder. The cylinder has an outer diameter of 3.5 mm.

Figure 3(b) shows a part of a film forming jig 35 used for sputtering according to the present invention and formed with a generally cross-shaped notched portion 36 in its disk-shaped metal member. The slit groove 26 in the lower die 24 and the notched portion 36 have a dimensional relationship such that the former engages with and is hold by the latter. Specifically, the slit groove 26 has a width of 1 mm and an outer diameter Φ of 2.5 mm. The notched portion 36 has a board thickness of 0.8 mm and a width of 2.7 mm.

Figure 3(c) shows a holding member 37 formed with a step portion 38 for holding the film forming jig 36. Furthermore, theholdingmember 37 is attached to a sputter apparatus (not shown).

As described above, the conventional upper and lower dies are each formed with the flange portion. Accordingly, the size of the flange portion determines the amount per batch during sputtering. The upper and lower dies according to the present embodiment are simply cylindrical, thus enabling the significant improvement of throughput per batch. It has been confirmed that sputtering with the present jig enables films to be formed as in the case with the prior art.

The film forming jig 35 according to the present embodiment is an example of aplate according to thepresent invention. Those parts of the notched portion 36 according to the present embodiment in which the respective lower dies 24 are caught are an example of a plurality of holes according to the present invention.

### (Embodiment 4)

Now, Embodiment 4 will be described.

Figures 4(a), 4(b), 4(c), 5(d), 5(e), and 5(f) are sectional views of essential parts of a disassembly and assembly apparatus for an optical element molding die, illustrating a configuration of the apparatus and a process executed by the apparatus. The disassembly and assembly apparatus according to the present embodiment assembles the molding block 31 before a step of forming an optical element and disassembles the molding block 31 after the step of forming an optical element.

Figure 4(a) shows the molded molding block 31 after having been molded in Figure 2(b). The molding block 31 is composed of the upper die 21, the lower die 24, the mold 29, and the support die 27 with the through-hole 28, and the optical element 34. The optical element has been completely molded.

Figure 4(b) shows a configuration of a die disassembly and assembly apparatus 41. A vertically movable cylinder 44 is provided on an L-shaped column 43 fixed to a base 42. A sucking jig 46 that sucks the upper die 21 is fixed to the tip of a rod 45 in the cylinder 44 by a bar 47 using screws 48 and 49, the bar 47 moving the sucking jig 46 in union with the cylinder 44. The sucking jig 46 can be smoothly moved in the vertical direction with the help of a slide bearing 50 contained in the column 43.

A compression spring 51 is wound between the upper end of the column 43 and the bar 47 to allow the sucking jig 46 to abut lightly against the upper die 21. Further, the compression spring 51 serves to reduce loads on the upper die 21 against the downwardpressure of the cylinder.

The sucking jig 46 is cylindrical and its lower end surface is provided with a planar sucking surface 52. The other upper end surface is provided with a suction pipe 53 connected to a sucking apparatus (not shown). The sucking surface 52 and the suction pipe 53 are in communication with each other through a through-hole 54. A pin hole 55 is formed in the base 42 below a central axis along which the sucking jig 46 is moved in the vertical direction. A die ejecting pin 56 is provided in the pin hole 55 and connected to a vertically movable cylinder (not shown).

Furthermore, in the left of this figure, a transfer member 57 is connected to a vertically and rotatively movable mechanism (not shown) in order to take out the optical element 34 and introduce the molding material 30 (see Figure 2A).

Now, description will be given of a process of disassembling and assembling the mold.

Figure 4(b) shows that after the molding block 31 has been placed so that the through-hole 28, formed in the support die 27 of the molding block 31, coincides with the axis of the die ejecting pin 56, the cylinder 44 is lowered to abut the sucking surface 52 against the upper end surface of the upper die 21. The lowering speed used for this operation and the load acting on the optical element during this operation are selected so as not to damage the molding surface of the die or the optical element. However, 30 mm/sec. and 2 Kgf are desirably appropriate. 21 is sucked. At the same time, the cylinder 44 is moved upward synchronously with the upward movement of the die ejecting pin 56.

Figure 4(c) shows that the ejecting pin 56 has been elevated and stopped at a predetermined position and that only the cylinder 44 has been lifted up to the upper end while keeping sucking the upper die 21. At the predetermined position, the optical element 34 can be easily taken out, i.e. it does not cut into the mold 29. The upper die 21 and the optical element 34 have been moved out of the almost closed mold and are thus completely separated from each other.

Figure 5(d) shows that the transfer member 57 has been moved rotatively and then downward and has then sucked and lifted up the optical element 34 using means such as suction. Subsequently, the transfer member 57 is rotatively moved again, and stops the suction to release the optical element from the transfer member 57.

Figure 5(e) shows that the transfer member 57 is used to suck the molding material 30 to get ready for construction of a molding block. The die ejecting pin 56 is moved downward to place the lower die 24 on the support die 27. Then, the transfer member 57 stops the suction to place the molding material 30 in the center of the optically functioning surface 25 of the lower die 24. Furthermore, transfer member 57 is rotatively moved and then the cylinder 44 is lowered. At the position where the upper die 21 is fitted into the mold 29, the sucking jig 46 stops the suction.

Figure 5(f) shows that the molding block 31 has been completely assembled to get ready for press molding. Executing steps (a) to (f) allow the optical element molding die to be easily disassembled and assembled.

In the die disassembly and assembly apparatus according to the present embodiment, the molding block is configured differently from the prior art, i.e. the upper and lower dies 21 and 24 are configured to be simply cylindrical and the support die 27 is formed with the through-hole 28. The molded optical element is taken out of the mold while being sandwiched between the upper and lower dies. Accordingly, the optical element canbe taken out more reliably and easily and automatically. This allows optical elements to be more effectively produced to reduce their costs.

In Figures 4(b), 4(c), 5(d), and 5(e), a basic configuration of the die disassembly and assembly apparatus has been described. It is possible to combine operations such as the vertical movement of the vertically moving cylinder and die ejecting pin 56 and the vertical and rotative movement of the transfer member 57 as well as the control of these operations, described above, with conventional techniques that use an air cylinder using compressed air as a driving source or a sequence circuit. The illustration of these devices is therefore omitted.

The cylinder 44 and bar 47 according to the present embodiment are examples of moving means according to the present invention.

### (Embodiment 5)

Now, Embodiment 5 will be described.

With reference to Figures 6 and 7, description will be given of an optical element molding die and its manufacturing method according to the present embodiment.

Figure 6(a) is a perspective view of the upper and lower dies. The upper die 21 has the convex optically functioning surface formed on one end surface of the cylinder. The lower die 24 has the concave optically functioning surface 25 formed on one end surface of the cylinder. The upper and lower dies 21 and 24 have the slit grooves 23 and 26, respectively, formed in their outer diameter surface.

Figure 6(b) shows a cylindrical mold 61. Ten first through-holes 62 are disposed on a predetermined circle line at equal intervals. The upper die 21 and the lower die 24 (shown by dotted lines) are accommodated in each of the first through-holes 62 with a predetermined gap between these dies for slidable movement. An inner diameter portion 63 of the mold 61 is precisely polished so as to have predetermined dimensions.

Figure 6(c) shows a support die 64 formed with a step portion 65. The step portion 65 is wrought to have an outer diameter dimension almost equal to the dimension of the inner diameter portion 63 of the mold 61. Ten second through-holes 62 are formed on a similar circle line at equal intervals. Each of the second through-holes 62 has a smaller hole dimension than the first through-hole 62. Consequently, the support die 64 does not only allow the lower die 24 to be placed on it but is also formed with a through-hole through which a pin for allowing the disassembly of the die is passed. The support die 64 also allows the whole molding block to slide stably on, for example, a heating plate. With the axis of each first through-hole allowed to coincide with the axis of the corresponding second through-hole, the step portion 65 of the support die 64 is loosely pressed and fitted into the inner diameter portion 63 of the mold 61 for integration.

In order to allow the mold 61 and the support die 64 to be appropriately positioned when they are integrated together, they may have a concave and convex relationship of any kind.

As described above, the optical element molding die enables a plurality of optical elements to be simultaneously formed. The first through-hole accommodates the lower die, the molding material, and the upper die. The support die is disposed below the lower die. Further, in the description of Embodiment 4, a single molding die is disassembled and assembled. However, it is contemplated the same basic configuration may be used to disassemble and assemble a plurality of molding dies simultaneously. This is very effective in improving the productivity associated with molding of optical elements and with die disassembly and assembly.

With reference to Figures 7(a) to 7(e), description will be given of a process of working an optical element molding die.

Figure 7(a) shows a cylinder consisting of a cemented carbide mainly composed of tungsten carbide (WC), the outer diameter of which is wrought to be 3.5 mm using a cylindrical polishing machine and a resinoid-bonded diamond grindingwheel (Number #240). Although not shown, the material may be wrought by using a collet chuck to hold one side of it while carrying out center work from the other side or using a centerless polishing machine. The grindstone was changed, and a diamond grindstone of thickness 0.95 mm was used to form several slit grooves 26 at predetermined pitches as shown in the figure so as to reach a depth of cut of 0.5 mm. The wrought slit grooves 26 each had a groove width of about 1 mm and a depth of cut of about 0.5 mm. The conditions under which the outer diameter was ground included a grindstone peripheral speed of 2,800 m/min., a work rotation speed of 150 rpm, and a cut amount of 3 micron/operation. The slit grooves were appropriately cut at a grindstone peripheral speed of 3,000 m/min. Furthermore, a surface grinder was used to polish the outer peripheral surface of the cylinder into a D cut surface (not shown) so as to reach a depth of cut of 0.05 mm. The D cut surface is not adversely affected by the optically functioning surface.

Figure 7(b) shows lower die work pieces 24 into which a diamond cutter was used to cut the material at pitches similar to those used to form the slit grooves 26. Each of the lower dies 24 was wrought so that the outer diameter dimension between the slit 26 and its side on which the optically functioning surface was formed is larger than that between the slit 26 and the opposite side. This is because gas must be vented from the interior of the cavity while the upper and lower dies are incorporated into the mold. A common working machine such as cutter or a cylindrical polishing machine was used which can work metal and ceramics.

Figure 7(c) shows that during a step of forming the optically functioning surface 25 on the end surface of the lower die work piece 24, the work piece was fixed by precisely fitting it into a central hole in a rotating disc 67 and using wax to glue it and the central hole together. A work rotating shaft 68 was rotated at 200 rpm. The lower die was wrought using a superfine working machine having a grindstone rotating shaft 69 independent of the work rotating shaft 68. A diamond shaft grindstone 70 having an abacus-bead-shaped cross section is provided at the tip of the grindstone rotating shaft 69. The material was wrought using the shaft grindstone 70 of outer diameter Φ 5 mm at 80,000 rotations/min. A shape generating machine was used on which the work rotating shaft 68 is mounted and which can be subjected to simultaneous 2.5-axis NC control. The machine was programmed so that its motion track 71 draws a circular arc. The machine was used to cut the material at several micron increments in the direction of an arrow -Z in the figure to form a spherical optically functioning surface 25 of radius of curvature 4.458 mm. Subsequently, the shape generating machine was moved away in the direction of an arrow +Z in the figure. Further, the lower die 24 attached to the rotating disc was removed. Subsequently, under similar conditions, 10 lower dies and 10 upper dies 21 were produced. Each of the upper dies 21 was convex and had a radius of curvature of 3.444 mm.

Figure 7(d) shows that the lower dies 24 wereprecisely glued to a grinder 72, that the surface of each lower die 24 opposite to the optically functioning surface 25 was then ground, and that a surface grinder was then used to carry out batch grinding so that all the molds had the same height dimension. A grinding wheel was rotated in the direction of an arrow in the figure at a peripheral speed of 3,000 m/min. A bed to which the grinder 72 was fixed was traversed (lateral motion from +X to -X and longitudinal direction from +Y to -Y in the figure). The depth of cut was 1 to 2 micron/traverse, and a resinoid-bonded diamond grindstone was used. The height of the ground lower die 24 was confirmed to be ±2 micron of the desired dimension. The height of the ground upper die 21 was confirmed to be ±4 micron of the desired dimension. The slit grooves in all the upper and lower dies were locked on a washing jig and then supersonically cleaned using a solvent.

Figure 7(e) shows that after the optically functioning surface was wrought and cleaned, the slit grooves 26, formed in the respective lower dies 24, were engaged with the notched portion 36 in the film forming jig 35 at four sites (n=4), and that the film forming jig 35 was then incorporated into the holding member 37, which was then attached to the sputter apparatus. This apparatus executes a magnetron high-frequency sputtering method. The apparatus used platinum (Pt)-tungsten (W) as a target to form a 1-micron release film composed of 50 atom% of Pt and 50 atom% of W at a degree of vacuum of 5 × 10⁻⁴ Torr and a power of 600 W. The lower dies 24 were thus completed. A similar working process was executed and a similar film was formed on each of the upper discs 21 to complete creating the molds. As described above, compared to the conventional manufacture of molds formed with flange portions, the present embodiment can simplify and streamline the process and stabilize the accuracy. Therefore, the costs of the molds are reduced.

### (Embodiment 6)

Now, Embodiment 6 will be described.

Figures 8(a), 8(b), 8(c), 8(d), 8(e), 9(f), 9(g), and 9(h) are sectional views illustrating essential parts of a manufacturing process for an optical element.

Figure 8(a) shows a molding block 101 composed of molds 104 each shaped like a cylinder in which a plurality of first through-holes 108 are formed so as to accommodate a plurality of upper dies 102 and lower dies 103and molding materials 107, and a support die 105. Second through-holes 106 are formed in the support die 105. A step portion 109 of the support die is loosely pressed into the inner peripheral surface of each mold for fixation so that the central axis of each second through-hole 106 coincides with the central axis of the corresponding first through-hole 108. The step portion is loosely pressed in in order to allow heat to be equally transmitted during formation without impairing the positional relationship between the mold and the support die and to allow the support die to be removed if the whole molding die including the upper and lower dies must undergo maintenance or any molded lens is defective.

The first and second through-holes 108 and 106 are wrought to have diameters of 3.5 mm and 2.0 mm, respectively. As the molding material 107, a spherical molding material of Φ 2.75 mm is obtained by mirror-polishing a glass material mainly consisting of borosilicate barium (flexure point: 549°C and glass transition point: 501°C). The radii of curvature set for the optically functioning surfaces of the upper die 102 and lower die 103 are 3.444 mm and 4.458 mm, respectively. The optical elements to be obtained by molding are convex meniscus lenses.

Figure 8(b) shows that the molding block 101 is vertically sandwiched between an upper heating plate 108' and a lower heating plate 109' which have heater 110 built-in in the upper side and in the lower side so as to be wholly heated and is then heated up to a temperature at which the molding materials 107 can be pressed and deformed. In the present embodiment, the molding block is set between the upper and lower heating plates heated and set at 600°C and is held for 120 seconds.

Figure 8(c) shows that an applied pressure P of 8,000 N is used to press and deform the molding block via the upper heating plate 108'. Each molding material 107 is markedly deformed to have a meniscus shape. Then, the optically functioning surfaces of the upper and lower dies, respectively, are transferred to the molding material.

Figure 8(d) shows that after the deformation has been completed, the upper and lower heating plates 108' and 109' are powered off while continuously exerting the pressure and that the whole molding block 101 is cooled down until the temperature reaches 480°C, at which point the applied pressure P is eliminated. The molding block 101 is further cooled down to the room temperature to complete molding lenses 111.

The molding steps shown in Figures 8(b), 8(c), and 8(d) are executed in an inert gas, and a heating source including the molding block is contained in a chamber (not shown). Further, temperature and pressure control is executed via a thermocouple or a solenoid controlled valve.

Figure 9(e) illustrates the basic concept of a step of disassembling the molding block 101 to take out the molded lenses 111. A die sucking jig 112 is moved in a -Z direction so that first, the upper dies 102 areprecisely fitted in the die sucking jig 112. Subsequently, each die ejecting pin 113 is pushed up in a +z direction to move the corresponding lens 111 up to the top of the corresponding first through-holes 108 with the corresponding upper die, lens, and lower die sandwiched. At this time, the plurality of pins simultaneously ej ects the respective upper and lower dies. Accordingly, the horizontal positions of the tips of the pins are precisely set. Further, these positions are accurately set relative to the position of the die sucking jig, which sucks the upper dies. For the lenses used in the present embodiment, the lowering speed of the die sucking jig, the elevating speed of the die ejecting pins, and loads on the optical elements are selected so as not to damage the molding surfaces of the molds or the lenses. It is desirable to set conditions under which no unbalanced loads are imposed on the plurality of molding modes or lenses. A speed of 30 mm/sec. or less and a load of 5 Kgf were found to be preferable.

Figure 9(f) shows that subsequently, with the die sucking jig 112 keeping sucking the upper dies 102, the die sucking jig is further moved in a +Z direction and then caused to stand by. Subsequently, a lens sucking jig 115 sucks the lenses 111 on the respective lower dies 103 lifted by the respective die ejecting pins 113. The sucking jig 115 is then rotatively moved. Then, the suction is cleared to collect the lenses 111.

Figure 9(g) shows that the lens sucking jig 115 sucks the molding materials 107 and that the suction is then cleared above the first trough-holes 108 to drop the molding materials 107 into the respective first through-holes 108.

Figure 9(h) shows that subsequently, the die sucking jig 112 is moved in the -Z direction to accommodate the upper dies 102 in the respective first through-holes 108, and is then moved in the +Z direction to complete disassembling and assembling the molding dies.

When the jig was produced and a disassembly and assembly operation was manually performed 20 times using the molding die disassembly and assembly apparatus according to the present embodiment, it was confirmed that every operation was successfully accomplished without causing the lenses 111 to cut into the correspondingfirst through-holes. Further,the present embodiment enables 10 lenses to be simultaneously molded, thus significantly improving the productivity. It is thus possible to improve significantly the productivity associated with a molding process and a die disassembly and assembly process, included in a manufacturing process for an optical element. The present embodiment is also very effective in reducing the costs of lenses and investments in shaping facilities. When the performance of n=200 lenses obtained by the above described optical element manufacturing method was measured using a Fizeau interferometer, the average of transmitted wave front aberration was 0.067, astigmatism was 0.023 AMT, comma was 0.159 AMT, and spherical aberration was 0.865 AMT. When these lenses were used in optical systems for optical pickups, they were confirmed to be available without creating any practical problems.

As is apparent from the embodiments of the present invention, the present invention provides a sucking jig for optical elements, a molding die, a sputtering film forming jig for the mold, a disassembly and assembly apparatus for the molding die, a working method of the molding die, and a manufacturing method of optical elements using the above jigs , mold, apparatus , and method, all of which serve to reduce the costs of optical elements and improve the productivitysignificantly. The present invention can thus be effectively utilized for industries.

### Industrial Applicability

As is apparent from the above description, the present invention provides a sucking jig, a molding die, and a disassembly and assembly apparatus and method all of which serve to improve the productivity associated with the extraction of a manufactured lens from the molding die.

Further, the present invention provides a die and a plate which reduce working costs.

Furthermore, the present invention provides a die and a plate which improve the productivity associated with the formation of a release film by sputtering, thus reducing costs.

## Claims

1. An upper die or lower die for lens molding wherein a groove is formed in its side.

2. The die according to claim 1, wherein the die is a cylinder having said groove formed on its circumference.

3. A plate comprising a plurality of holes in which the groove in the die according to claim 1 or 2 is caught and held,
wherein said die is held when said die is sputtered.

4. A suction jig which enters the die and does not abut against a center of a target lens surface but abut against a periphery of said lens surface.

5. The suction jig according to claim 4, having a radius of curvature which is larger than that of the cooled target lens surface or being a flat plate when said target lens surface is concave.

6. The suction jig according to claim 4, having a radius of curvature which is smaller than that of the cooled target lens surface when said target lens surface is convex.

7. A molding die comprising:
an upper die for lens molding;
a lower die for lens molding;
a support die; and
a mold,
wherein at least either said upper or lower dies has no flange,
said support die is provided below the die having no flange,
one or more through-holes are formed in the support die so that lifting pins can be inserted through the respective through holes, and
said upper and lower dies can be slid relative to said mold.

8. The molding die according to claim 7, wherein:
said mold is a member in which a plurality of upper and lower die insertion holes,
said upper die and lower die are slidably housed in each of the holes,
a positioning concave or convex portion is formed in said mold,
a convex or concave portion is formed which corresponds to said positioning concave or convex portion, and
a plurality of said through-holes are formed in said support die at positions corresponding to positions of said upper and lower die insertion holes.

9. A disassembly and assembly apparatus comprising:
a base on which the molding die according to claim 7, having a pressed lens, is placed;
a pushing-up pin;
a sucking jig; and
moving means of moving said sucking jig,
wherein at least an operation is performed which comprises using said push-up pin to lift said upper and lower dies and said lens up to a position where said lens is exposed from said mold,
subsequently, at least an operation is performed which comprises using said sucking jig to suck one of the dies and using said moving means to separate the die from said lens, and
said lens is taken out.

10. The disassembly and assembly apparatus according to claim 9, wherein when said pushing-up pin is used to push up the upper and lower dies and the lens, the pushing-up operation of said pushing-up pin is synchronized to the moving operation of said sucking jig.

11. Adisassemblyandassemblymethodusingadisassembly and assembly apparatus comprising a base on which the molding die according to claim 7, having a pressed lens, is placed, a pushing-up pin, a sucking jig, and moving means of moving said sucking jig, said method further comprising:
performing at least a step of using said pushing-up pin to lift said upper and lower dies and said lens up to a position where said lens is exposed from said mold,
subsequently, performing at least a step of using said sucking jig to suck one of the dies and using said moving means to separate the die from said lens, and
taking out said lens.
